(19) Europäisches Patentamt
European Patent Office
Office européen des brevets

(11) **EP 3 228 958 B1**

(12) **EUROPEAN PATENT SPECIFICATION**

(45) Date of publication and mention
of the grant of the patent:
**19.05.2021 Bulletin 2021/20**

(51) Int Cl.:
***F25B 49/02*** *(2006.01)*

(21) Application number: **17160108.1**

(22) Date of filing: **09.03.2017**

(54) **LINKAGE CONTROL METHOD AND APPARATUS FOR INDOOR AND OUTDOOR UNITS OF PRECISION AIR CONDITIONER**

VERBINDUNGSSTEUERUNGSVERFAHREN UND -VORRICHTUNG FÜR INNEN- UND AUSSENEINHEITEN EINER PRÄZISIONSKLIMAANLAGE

PROCÉDÉ ET APPAREIL DE COMMANDE DE LIAISON POUR UNITÉS INTÉRIEURES ET EXTÉRIEURES DE CONDITIONNEUR D'AIR DE PRÉCISION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2016 CN 201610134164**

(43) Date of publication of application:
**11.10.2017 Bulletin 2017/41**

(73) Proprietor: **HUAWEI TECHNOLOGIES CO., LTD. Shenzhen Guangdong 518129 (CN)**

(72) Inventors:
  • **HE, Haibo**
    **Shenzhen, Guangdong 518129 (CN)**
  • **ZHANG, Chao**
    **Shenzhen, Guangdong 518129 (CN)**
  • **LI, Malin**
    **Shenzhen, Guangdong 518129 (CN)**

(74) Representative: **Thun, Clemens**
    **Mitscherlich PartmbB**
    **Patent- und Rechtsanwälte**
    **Sonnenstraße 33**
    **80331 München (DE)**

(56) References cited:
    **EP-A1- 2 767 779      US-A1- 2012 210 736**
    **US-A1- 2012 253 543    US-A1- 2014 345 307**

## Description

## TECHNICAL FIELD

The present invention relates to the field of electronic communications technologies, and in particular, to a linkage control method and apparatus for indoor and outdoor units of a precision air conditioner.

## BACKGROUND

For IT devices in a data center, high power density, heavy heat load, and a relatively strict requirement on temperature and humidity need a precision air conditioner system specific to an equipment room, to ensure stable running of the data center. According to an energy consumption analysis of the data center, the precision air conditioner system is a system with highest energy consumption in the data center except the IT devices, and power consumption of the precision air conditioner system occupies 35% to 40% of total power consumption of the data center. Improving a COP of the precision air conditioner system is the key to energy saving of the data center, and the COP is a ratio of a heat capacity (C) to an input power (P), that is, a coefficient of performance of an air conditioner.

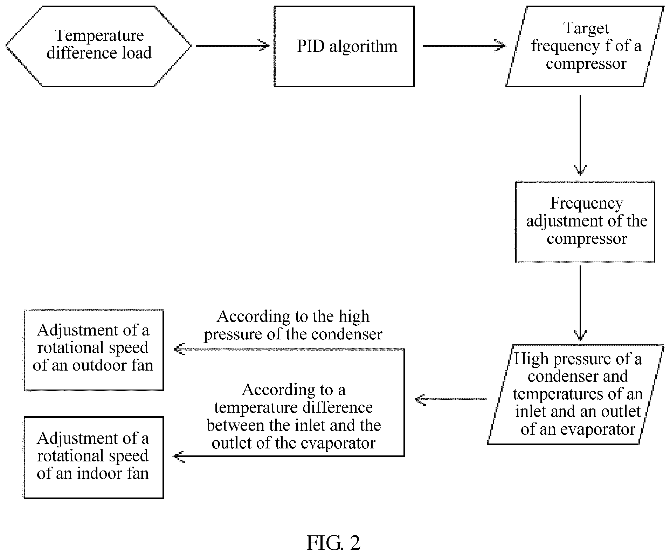

The precision air conditioner system includes major components such as a compressor, a condenser (an outdoor unit), an expansion valve, and an evaporator (an indoor unit). As shown in FIG. 2, the compressor compresses a gaseous refrigerant into a high-temperature and high-pressure state, and sends the compressed refrigerant to the condenser. After heat dissipation, the refrigerant changes into a middle-temperature and high-pressure liquid state. The liquid refrigerant flows through a throttle mechanism (the expansion valve) and changes into a low-pressure and low-temperature gas-liquid mixed state, and then enters the evaporator (the indoor unit). The gas-liquid two-phase refrigerant is evaporated in the evaporator, and during a phase change from liquid to gas, the refrigerant absorbs a large amount of heat, and cools an indoor environment. The refrigerant from the evaporator is in a superheated gaseous state, and then the gaseous refrigerant flows back to the compressor to continue the circulation.

The condenser and the evaporator have matching fans, and a function of the fans is to enhance a heat exchange effect by means of forced convection. Rotational speeds of the fans affect a capacity of heat exchange between the condenser and the evaporator. When the data center is running, cooling load changes with fluctuation of heat generated by the IT devices, and the compressor, the fan of the evaporator, and the fan of the condenser in a cooling system need to be adjusted in terms of rotational speed, so that cooling capacity output of the system, called in the following cooling capacity of the compressor, matches a cooling capacity requirement, called in the following a target cooling capacity of the compressor.

To adjust and control the rotational speeds of the fans, in the precision air conditioner system, a pressure sensor is installed at an inlet end of the condenser, so as to detect pressure of the high-pressure gaseous refrigerant transmitted from the compressor (therefore, the pressure sensor is also referred to as a high-pressure sensor). A larger pressure value detected by the sensor indicates a higher saturation temperature of the refrigerant under the pressure, and further a higher heat exchange capacity that needs to be implemented by a heat exchanger, so that the rotational speed of the fan of the condenser needs to be increased; otherwise, the rotational speed of the fan needs to be decreased. For the evaporator, temperature sensors are installed at an inlet and an outlet that are along an air flow direction, so as to detect a temperature difference between air entering and air leaving the evaporator. For the evaporator, a product of an air specific heat capacity, an air temperature difference between the inlet and the outlet, and an air volume approximates to a constant. A smaller air temperature difference between the inlet and the outlet indicates a relatively greater air volume, so that the rotational speed of the fan of the evaporator needs to be decreased; otherwise, the rotational speed of the fan of the evaporator needs to be increased.

By convention, a target control value of the rotational speed of the compressor is set according to temperature difference load. After the rotational speed of the compressor is adjusted to a target rotational speed, the rotational speed of the fan of the outdoor condenser is adjusted according to a pressure value of the high-pressure sensor, and the rotational speed of the fan of the indoor evaporator is adjusted according to the air temperature difference between the inlet and the outlet of the evaporator. That is, the rotational speed of the outdoor fan is determined by the high-pressure sensor, and the rotational speed of the indoor fan is determined by using the temperature difference between the inlet and the outlet. A control target is to make the rotational speeds of the fans match a heat exchange capacity requirement. However, such a control policy is characterized by a slow adjustment and control speed and a high delay.

US 2012/0210736 A1: A cascade heat pump system is configured with variable-speed compressors which allow operation at a high system coefficient of performance for a given thermal load. An electronic control module may be utilized to dynamically vary the speed of the compressors to achieve maximum energy efficiency. Variable-speed fans or blowers may also be used Moreover, document US 2012/210736 A1 discloses a linkage control method according to the preamble of claim 1 and a linkage control apparatus according to the preamble of claim 3.

US 2012/0253543 A1: A method and a system control an operation of a vapor compression system using a set of control inputs. A control value is determined based on an output of the operation of the vapor compression system and a setpoint for the operation of the vapor compression system. The control value is used to select at least a subset of the set of control inputs from a computer-readable medium, wherein the subset of control inputs, along or in combination with a function of the control value, forms the set of control inputs.

US 2014/0345307 A1: An evaporator setpoint temperature for a refrigeration system is adjusted by an electronic control module to maximize a ratio of volume of condensate produced per unit of electricity consumed. When the control module detects a change in the relative humidity of air entering an evaporator in the refrigeration system, the module determines the new dew point for the air, compensates the dew point value by a predetermined offset value, and changes the setpoint for refrigerant temperature in the evaporator to the compensated dew point value. The control module operates the refrigeration system to drive the evaporator temperature to the compensated dew point value. Refrigeration system parameters measured and modified by the control module include operating speed of compressors, number of operating compressors, refrigerant flow through an expansion valve, compressor suction pressure, and fan speeds for the condenser and evaporator.

## SUMMARY

Embodiments of the present invention provide a linkage control method and apparatus for indoor and outdoor units of a precision air conditioner, so as to resolve the following technical problems: An evaporator and a condenser are separately controlled in an existing precision air conditioner system, and therefore, a coefficient of performance COP of the precision air conditioner system is not considered and optimized in a control policy, an adjustment and control speed is slow, and a delay is high. This problem is solved by the subject matter of the independent claims. Further implementation forms are provided in the dependent claims.

A first aspect provides a linkage control method for indoor and outdoor units of a precision air conditioner, as set out in claim 1, including:

obtaining temperature difference load of an evaporator and obtaining, according to a PID algorithm, a target working frequency $f_n$ of a compressor, where the temperature difference load is a product of an air volume of the evaporator, an air temperature difference between an inlet and an outlet of the evaporator, and an air specific heat capacity;

obtaining a target cooling capacity $Q_n$ according to a target cooling capacity function and in combination with a condensing temperature $T_{cn}$, an evaporating temperature $T_{en}$, and the target working frequency $f_n$ of the compressor in a current status, where the condensing temperature $T_{cn}$ is a temperature of a refrigerant in a condenser, and the evaporating temperature $T_{en}$ is a temperature of the refrigerant in the compressor; obtaining a target power $W_1$ of the compressor according to a power function of the compressor and in combination with the condensing temperature $T_{cn}$, the evaporating temperature $T_{en}$, and the target working frequency $f_n$ of the compressor in the current status; obtaining a target power $W_2$ of the condenser according to a power function of the condenser and in combination with the condensing temperature $T_{cn}$, the evaporating temperature $T_{en}$, and the target working frequency $f_n$ of the compressor in the current status, a temperature difference $\Delta t_1$ between an inlet's air temperature and an outlet's air temperature of the condenser, and a rotational speed $M$ of a fan of the condenser, where the rotational speed $M$ of a fan of the condenser is obtained by a pressure sensor according to pressure of the refrigerant at a front end of the condenser; and obtaining a target power $W_3$ of the evaporator according to a power function of the evaporator and in combination with the condensing temperature $T_{cn}$, the evaporating temperature $T_{en}$, and the target working frequency $f_n$ of the compressor in the current status, a temperature difference $\Delta t_2$ between the inlet's air temperature and the outlet's air temperature of the evaporator, and a rotational speed $N$ of a fan of the evaporator; the value of coefficient of performance (COP) in the current status of the air conditioner is: $COP=Q_n/(W_1+W_2+W_3)$;

optimizing, in a range of $Q_n(\pm a\%+1)$, the target working frequency $f_n$, the condensing temperature $T_{cn}$, and the evaporating temperature $T_{en}$ respectively in specified ranges according to a coefficient of performance COP function of the air conditioner, so as to obtain a target working frequency $f_n d$, a target condensing temperature $T_{cn} d$, and a target evaporating temperature $T_{en} d$ when a COP value is maximum, where the 'a' is a preset natural number; and adjusting the rotational speed $N$ of a fan of the evaporator according to a target temperature difference between the inlet and the outlet of the evaporator, controlling the compressor to run at the target working frequency $f_n d$, and adjusting the rotational speed $M$ of a fan of the condenser according to the target condensing temperature $T_{cn} d$ of the condenser, where the target temperature difference between the inlet and the outlet of the evaporator is $\Delta t_2 - (T_{en} d - T_{en})$.

According to the invention, the coefficient of performance COP function of the air conditioner includes:

$$COP=Q/(W_1+W_2+W_3).$$

According to the invention, the power function of the compressor includes:

$$W_1 = f_1(f, T_c, T_e).$$

According to the invention, the power function of the condenser includes:
the power function of the condenser: $W_2 = f_2(f, T_c, T_e, \Delta t_1, N)$.

According to the invention, the power function of the evaporator includes:
the power function of the evaporator: $W_3 = f_3(f, T_c, T_e, \Delta t_2, M)$.

With reference to any one of the first aspect to the fourth possible implementation manner of the first aspect, in a fifth possible implementation manner,
the target cooling capacity function of the compressor includes:

$$Q = f_0(f, T_c, T_e).$$

With reference to the first aspect, in a possible implementation manner,
the optimizing, in a range of $Q_n(\pm a\% + 1)$, the target working frequency $f_n$, the condensing temperature $T_{cn}$, and the evaporating temperature $T_{en}$ respectively in specified ranges according to a coefficient of performance COP function of the air conditioner, so as to obtain a target working frequency $f_n d$, a target condensing temperature $T_{cn} d$, and a target evaporating temperature $T_{en} d$ when a COP value is maximum specifically includes:
optimizing, in the range of $Q_n(\pm a\% + 1)$, the target working frequency $f_n$, the condensing temperature $T_{cn}$, and the evaporating temperature $T_{en}$ respectively in ranges $f_n \pm b$ Hz, $T_{cn} \pm c°C$, and $T_{en} \pm d°C$ according to the coefficient of performance COP function of the air conditioner, so as to obtain the target working frequency $f_n d$, the target condensing temperature $T_{cn} d$, and the target evaporating temperature $T_{en} d$ when the COP value is the maximum, where a, b, and c are preset constants.

A second aspect provides a linkage control apparatus for indoor and outdoor units of a precision air conditioner, as set out in claim 3, including:

a temperature sensor (1), configured to obtain an air temperature difference between an inlet and an outlet of an evaporator (2);
a pressure sensor (3), configured to obtain pressure of a refrigerant at a front end of a condenser (4), so as to adjust a rotational speed M of a fan of the condenser (4);
a processor (5), configured to obtain a target working frequency $f_n$ of a compressor (6) according to temperature difference load of the evaporator (2) and a PID algorithm, where the temperature difference load is a product of an air volume of the evaporator (2), the air temperature difference between the inlet and the outlet of the evaporator (2), and an air specific heat capacity, where the air volume of the evaporator (2) is a volume of air that flows through the evaporator (2) per unit time, where

the processor (5) is further configured to obtain a target cooling capacity $Q_n$ of the compressor according to a target cooling capacity function of the compressor (6) and in combination with a condensing temperature $T_{cn}$, an evaporating temperature $T_{en}$, and the target working frequency $f_n$ of the compressor in a current status, where the condensing temperature $T_{cn}$ is a temperature of the refrigerant in the condenser (4), and the evaporating temperature $T_{en}$ is a temperature of the refrigerant in the compressor (6);

the processor (5) is further configured to obtain a target power $W_1$ of the compressor (6) according to a power function of the compressor (6) and in combination with the condensing temperature $T_{cn}$, the evaporating temperature $T_{en}$, and the target working frequency $f_n$ of the compressor in the current status;

the processor (5) is further configured to obtain a target power $W_2$ of the condenser (4) according to a power function of the condenser (4) and in combination with the condensing temperature $T_{cn}$, the evaporating temperature $T_{en}$, and the target working frequency $f_n$ of the compressor in the current status, a temperature difference $\Delta t_1$ between an inlet's air temperature and an outlet's air temperature of the condenser (4), and the rotational speed M of a fan of the condenser (4);

the processor (5) is further configured to obtain a target power $W_3$ of the evaporator (2) according to a power function of the evaporator (2) and in combination with the condensing temperature $T_{cn}$, the evaporating temperature $T_{en}$, and the target working frequency $f_n$ of the compressor in the current status, a temperature difference $\Delta t_2$ between the inlet's air temperature and the outlet's air temperature of the evaporator (2), and a rotational speed N of a fan of the evaporator (2), where the rotational speed N of a fan of the evaporator (2) is determined by the temperature sensor (1) according to the air temperature difference between the inlet and the outlet of the evaporator (2); wherein the value of coefficient of performance (COP) in the current status of the air conditioner is: $COP = Q_n/(W_1 + W_2 + W_3)$;

the processor (5) is further configured to: optimize, in a range of $Q_n(\pm a\% + 1)$, the target working frequency $f_n$, the condensing temperature $T_{cn}$, and the evaporating temperature $T_{en}$ respectively in specified ranges according to a coefficient of performance COP function of the air conditioner, so as to obtain a target working frequency $f_n d$, a target condensing temperature $T_{cn} d$, and a target evaporating temperature $T_{en} d$ when a COP value is maximum, where a is a preset natural number; and

the processor (5) is further configured to adjust the rotational speed N of a fan of the evaporator (2) according to a target temperature difference between the inlet and the outlet of the evaporator (2), control the compressor (6) to run at the target working frequency $f_n d$, and adjust the rotational speed M of a fan of the condenser (4) according to the target condensing temperature $T_{cn} d$ of the condenser (4), where the target temperature difference between the inlet and the outlet of the evaporator (2) is $\Delta t_2 - (T_{en} d - T_{en})$; and
a memory (7), configured to store the foregoing data and programs.

According to the invention, the coefficient of performance COP function of the air conditioner includes:

$$COP = Q/(W_1 + W_2 + W_3).$$

According to the invention, the power function of the compressor (6) includes:

$$W_1 = f_1(f, T_c, T_e).$$

According to the invention, the power function of the condenser includes:
the power function of the condenser: $W_2 = f_2(f, T_c, T_e, \Delta t_1, N)$.
the power function of the evaporator includes:
the power function of the evaporator: $W_3 = f_3(f, T_c, T_e, \Delta t_2, M)$.

According to the invention, the target cooling capacity function of the compressor (6) includes:

$$Q = f_0(f, T_c, T_e).$$

With reference to the second aspect, in a possible implementation manner,
the optimizing, in a range of $Q_n(\pm a\% + 1)$, the target working frequency $f_n$, the condensing temperature $T_{cn}$, and the evaporating temperature $T_{en}$ respectively in specified ranges according to a coefficient of performance COP function of the air conditioner, so as to obtain a target working frequency $f_n d$, a target condensing temperature $T_{cn} d$, and a target evaporating temperature $T_{en} d$ when a COP value is maximum specifically includes:
optimizing, in the range of $Q_n(\pm a\% + 1)$, the target working frequency $f_n$, the condensing temperature $T_{cn}$, and the evaporating temperature $T_{en}$ respectively in ranges $f_n \pm b$ Hz, $T_{cn} \pm c°C$, and $T_{en} \pm d°C$ according to the coefficient of performance COP function of the air conditioner, so as to obtain the target working frequency $f_n d$, the target condensing temperature $T_{cn} d$, and the target evaporating temperature $T_{en} d$ when the COP value is the maximum, where a, b, and c are preset constants.

In the present invention, by using a target of optimizing an overall coefficient of performance (COP) of an air conditioner system, a target working frequency $f_n d$, a target condensing temperature $T_{cn} d$, and a target evaporating temperature $T_{en} d$ when a COP value is maximum are obtained, so that a technical solution of linkage control over rotational speeds of indoor and outdoor fans is implemented, and when the rotational speeds of the fans match a heat exchange capacity requirement, technical effects of fast adjustment and control, a low delay, and an optimum overall coefficient of performance of the air conditioner system are achieved.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of a linkage control method for indoor and outdoor units of a precision air conditioner according to an embodiment of the present invention;
FIG. 2 is a diagram of an implementation principle of a method for controlling indoor and outdoor units of a precision air conditioner in the prior art;
FIG. 3 is a diagram of an implementation principle of a linkage control method for indoor and outdoor units of a precision air conditioner according to an embodiment of the present invention;
FIG. 4 is a diagram of an implementation principle of another linkage control method for indoor and outdoor units of a precision air conditioner according to an embodiment of the present invention;
FIG. 5 is a diagram of an internal implementation principle of a linkage control apparatus for indoor and outdoor units of a precision air conditioner according to an embodiment of the present invention; and
FIG. 6 is a diagram of an internal implementation principle of another linkage control apparatus for indoor and outdoor units of a precision air conditioner according to an embodiment of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. The protection scope of the present invention is defined in the appended claims.

A precision air conditioner is widely applicable to a high precision environment such as a computer equipment room, a program-controlled exchange equipment room, a mobile satellite communications station, or a data container. This environment has very strict requirements on indicators such as temperature, humidity, and airflow distribution of air, and needs to be ensured by a precision air conditioner device that is specific to an equipment room and that is running securely and reliably 24 hours a day, 365 days a year.

The precision air conditioner is formed by connecting a compressor, a condenser located outdoor at downstream of the compressor, an evaporator located indoor at upstream of the compressor, an electronic expansion valve, and a throttle mechanism in the middle of the evaporator. The present invention is widely applicable to the high precision environment such as a computer equipment room, a program-controlled exchange equipment room, a mobile satellite communications station, or a data container, and is certainly also applicable to the field of households.

A control logic of the existing precision air conditioner has three disadvantages: First, a rotational speed of a fan of the condenser depends only on a high-pressure sensor, and a rotational speed of a fan of the evaporator depends only on a temperature difference between an inlet and an outlet, but in a cooling system, the condenser and the evaporator are connected in series, and the correlation between the condenser and the evaporator is ignored during independent control over the fans of the condenser and the evaporator. Second, a control target of the indoor and outdoor fans is to meet a heat exchange capacity requirement and implement output of a required cooling capacity (for the evaporator) or liquefaction of a refrigerant (for the condenser), thereby restricting further COP optimization. Third, after cooling load is changed, processes such as adjustment of a rotational speed of the compressor, a change in pressure at an inlet of the condenser, and a change in the temperature difference between the inlet and the outlet of the evaporator need to be experienced, so that a control instruction can be transferred to the indoor and outdoor fans. The control process has a slow speed, and when the system is unstable, repeated fluctuations occur. A heat exchange capacity and a coefficient of performance of the fan of the air conditioner are a pair of mutually restrictive factors, and therefore, a target heat exchange capacity needs to be obtained by using a minimum fan rotational speed, so as to maximize the coefficient of performance.

A coefficient of performance (COP) function of the air conditioner includes:

$$COP=Q/(W_1+W_2+W_3).$$

A power function of the compressor includes: $W_1=f_1(f, T_c, T_e)$.

A power function of the condenser includes: the power function of the condenser: $W_2=f_2 (f, T_c, T_e, \Delta t_1, N)$.

A power function of the evaporator includes: the power function of the evaporator: $W_3=f_3 (f, T_c, T_e, \Delta t_2, M)$.

A target cooling capacity function of the compressor includes: $Q=f_0(f, T_c, T_e)$.

Using a model as an example, a cooling capacity of the compressor (6) may be calculated by using the following function (function (a)):

$$Q = \frac{(C_1 - C_2 * T_c + C_3 * T_e) * V}{(C_4 - C_5 * T_e + C_6 * T_e^2) * f}$$

where $c_1$ to $c_6$ are constants (which are obtained through fitting calculation according to measured data of a specified model), $T_c$ is a condensing temperature (a variable), $T_e$ is an evaporating temperature (a variable), V is displacement (a constant) of the compressor (6), and f is a frequency (a variable) of the compressor (6). (Note: dimensionless treatment needs to be performed on $T_c$, $T_e$, V, and f.)

Using a model as an example, a power of the compressor (6) may be calculated by using the following function (function (b)):

$$w_1 = \frac{(C_7 - C_8 * T_c + C_9 * T_e) * V}{(C_{10} - C_{11} * T_e + C_{12} * T_e^2) * f * \eta}$$

where $c_7$ to $c_{12}$ are constants, $T_c$ is a condensing temperature (a variable), $T_e$ is an evaporating temperature (a variable), V is displacement (a constant) of the compressor (6), f is a frequency (a variable) of the compressor (6), and $\eta$ is efficiency (a constant) of the compressor (6). (Note: dimensionless treatment needs to be performed on $T_c$, $T_e$, V, and f.)

Using a model as an example, a power function of the outdoor fan (the condenser (4)) is $P_1 =f (V_{outdoor}, N)$, where

$V_{outdoor}$ is an air volume of an outdoor unit ((the condenser (4)), and $V_{outdoor}=(Q+ W_1)/(c^*\rho^*\Delta t_1)$.

Using a model as an example, a power function of the indoor fan is $P_2 =f (V_{indoor}, M)$, where

$V_{indoor}$ is an air volume of an indoor unit evaporator (2), and $V_{indoor}=Q/(c^*\rho^*\Delta t_2)$, where

c is an air specific heat capacity, p is an air density, and $\Delta t_1$ and $\Delta t_2$ are air temperature differences between inlets and outlets of the condenser (4) and the evaporator (2).

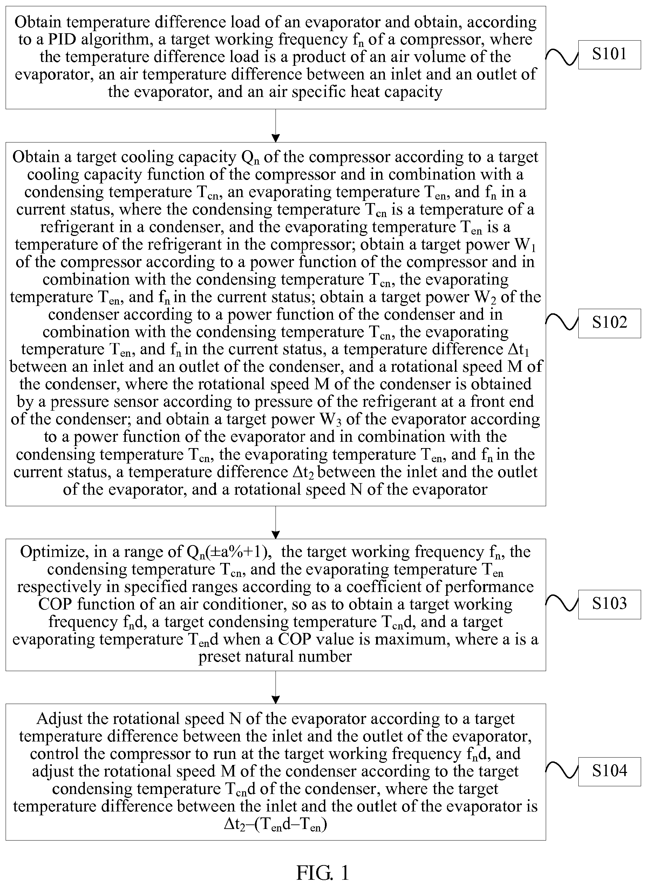

As shown in FIG. 1, FIG. 1 is a flowchart of a linkage control method for indoor and outdoor units of a precision air conditioner according to an embodiment of the present invention, and steps of this embodiment are as follows:

Step S101: Obtain temperature difference load of an evaporator and obtain, according to a PID algorithm, a target working frequency $f_n$ of a compressor, where the temperature difference load is a product of an air volume of the evaporator, an air temperature difference between an inlet and an outlet of the evaporator, and an air specific heat capacity.

Step S102: Obtain a target cooling capacity $Q_n$ of the compressor according to a target cooling capacity function of the compressor and in combination with a condensing temperature $T_{cn}$, an evaporating temperature $T_{en}$, and the target working frequency $f_n$ of the compressor in a current status, where the condensing temperature $T_{cn}$ is a temperature of a refrigerant in a condenser, and the evaporating temperature $T_{en}$ is a temperature of the refrigerant in the compressor; obtain a target power $W_1$ of the compressor according to a power function of the compressor and in combination with the condensing temperature $T_{cn}$, the evaporating temperature $T_{en}$, and the target working frequency $f_n$ of the compressor in the current status; obtain a target power $W_2$ of the condenser according to a power function of the condenser and in combination with the condensing temperature $T_{cn}$, the evaporating temperature $T_{en}$, and the target working frequency $f_n$ of the compressor in the current status, a temperature difference $\Delta t_1$ between an inlet and an outlet of the condenser, and a rotational speed M of the condenser, where the rotational speed M of the condenser is obtained by a pressure sensor according to pressure of the refrigerant at a front end of the condenser; and obtain a target power $W_3$ of the evaporator according to a power function of the evaporator and in combination with the condensing temperature $T_{cn}$, the evaporating temperature $T_{en}$, and the target working frequency $f_n$ of the compressor in the current status, a temperature difference $\Delta t_2$ between the inlet and the outlet of the evaporator, and a rotational speed N of the evaporator.

Step S103: Optimize, in a range of $Q_n(\pm a\%+1)$, the target working frequency $f_n$, the condensing temperature $T_{cn}$, and the evaporating temperature $T_{en}$ respectively in specified ranges according to a coefficient of performance (COP) function of the air conditioner, so as to obtain a target working frequency $f_n d$, a target condensing temperature $T_{cn}d$, and a target evaporating temperature $T_{en}d$ when a COP value is maximum, where a is a preset natural number.

Step S104: Adjust the rotational speed N of the evaporator according to a target temperature difference between the inlet and the outlet of the evaporator, control the compressor to run at the target working frequency $f_n d$, and adjust the rotational speed M of the condenser according to the target condensing temperature $T_{cn}d$ of the condenser, where the target temperature difference between the inlet and the outlet of the evaporator is $\Delta t_2 - (T_{en}d - T_{en})$.

Beneficial effects: by using a target of optimizing an overall coefficient of performance (COP) of an air conditioner system, a target working frequency $f_n d$, a target condensing temperature $T_{cn}d$, and a target evaporating temperature $T_{en}d$ when a COP value is maximum are obtained, so that a technical solution of linkage control over rotational speeds of indoor and outdoor fans is implemented, and when the rotational speeds of the fans match a heat exchange capacity requirement, technical effects of fast adjustment and control, a low delay, and an optimum overall coefficient of performance of the air conditioner system are achieved.

Further, the optimizing, in a range of $Q_n(\pm a\%+1)$, the target working frequency $f_n$, the condensing temperature $T_{cn}$, and the evaporating temperature $T_{en}$ respectively in specified ranges according to a coefficient of performance (COP) function of the air conditioner, so as to obtain a target working frequency $f_n d$, a target condensing temperature $T_{cn}d$, and a target evaporating temperature $T_{en}d$ when a COP value is maximum specifically includes:

optimizing, in the range of $Q_n(\pm a\%+1)$, the target working frequency $f_n$, the condensing temperature $T_{cn}$, and the evaporating temperature $T_{en}$ respectively in ranges $f_n \pm b$ Hz, $T_{cn} \pm c$°C, and $T_{en} \pm d$°C according to the coefficient of performance (COP) function of the air conditioner, so as to obtain the target working frequency $f_n d$, the target condensing temperature $T_{cn}d$, and the target evaporating temperature $T_{en}d$ when the COP value is the maximum, where a, b, and c are preset constants. Using a model as an example, optimization ranges of f, $T_c$, and $T_e$ are:the optimization range of f: $\pm 5$ Hz; the optimization range of $T_c$: $\pm 2$°C; and the optimization range of $T_e$: $\pm 2$°C.

FIG. 2 is a diagram of an implementation principle of a method for controlling indoor and outdoor units of a precision air conditioner in the prior art.

To adjust and control a rotational speed of a fan, in a precision air conditioner system, a pressure sensor is installed at an inlet end of a condenser, so as to detect pressure of a high-pressure gaseous refrigerant transmitted from a compressor (therefore, the pressure sensor is also referred to as a high-pressure sensor). A larger pressure value detected by the sensor indicates a higher saturation temperature of the refrigerant under the pressure, and further a higher heat exchange capacity that needs to be implemented by a heat exchanger, so that a rotational speed of a fan of the condenser needs to be increased; otherwise, the rotational speed of the fan needs to be decreased. For an evaporator, temperature sensors are installed at an inlet and an outlet that are along an air flow direction, so as to detect a temperature difference between air entering and air leaving the evaporator. For the evaporator, a product of an air specific heat capacity, an air temperature difference between the inlet and the outlet, and an air volume approximates to a constant. A smaller air temperature difference between the inlet and the outlet indicates a relatively greater air volume, so that a rotational speed of a fan of the evaporator needs to be decreased; otherwise, the rotational speed of the fan of the evaporator needs to be increased.

By convention, a target control value of a rotational speed of the compressor is set according to temperature difference load. After the rotational speed of the compressor is adjusted to a target rotational speed, the rotational speed of the fan of the outdoor condenser is adjusted according to a pressure value of the high-pressure sensor, and the rotational speed of the fan of the indoor evaporator is adjusted according to the air temperature difference between the inlet and the outlet of the evaporator. That is, the rotational speed of the outdoor fan is determined by the high-pressure sensor, and the rotational speed of the indoor fan is determined by using the temperature difference between the inlet and the outlet. A control target is to make the rotational speeds of the fans match a heat exchange capacity requirement.

A control logic of the existing precision air conditioner has three disadvantages: First, the rotational speed of the fan of the condenser depends only on the high-pressure sensor, and the rotational speed of the fan of the evaporator depends only on the temperature difference between the inlet and the outlet, but in the cooling system, the condenser and the evaporator are connected in series, and the correlation between the condenser and the evaporator is ignored during independent control over the fans of the condenser and the evaporator. Second, the control target of the indoor and outdoor fans is to meet the heat exchange capacity requirement and implement output of a required cooling capacity (for the evaporator) or liquefaction of the refrigerant (for the condenser), thereby restricting further COP optimization. Third, after cooling load is changed, processes such as adjustment of the rotational speed of the compressor, a change in pressure at the inlet of the condenser, and a change in the temperature difference between the inlet and the outlet of the evaporator need to be experienced, so that a control instruction can be transferred to the indoor and outdoor fans. The control process has a slow speed, and when the system is unstable, repeated fluctuations occur.

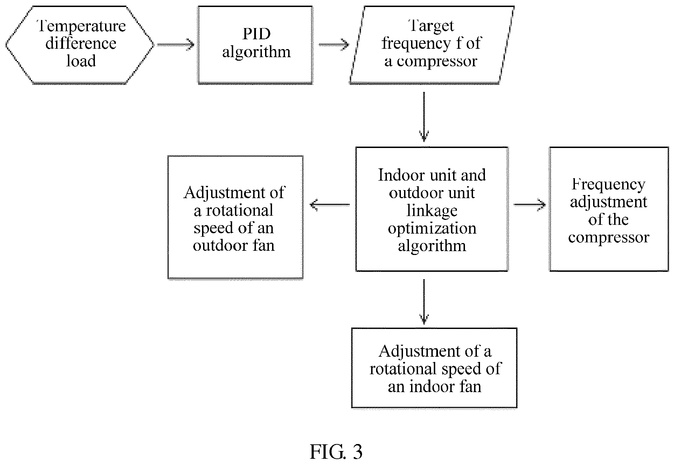

FIG. 3 is a diagram of an implementation principle of a linkage control method for indoor and outdoor units of a precision air conditioner according to an embodiment of the present invention. In the figure, an outdoor fan is a fan of a condenser, and an indoor fan is a fan of an evaporator.

After a target working frequency $f_n$ of a compressor is obtained according to temperature difference load of the evaporator and a PID algorithm, the method does not need to be performed as shown in FIG. 2, so as to avoid obtaining high pressure, low pressure, and temperatures of indoor and outdoor units only when a working frequency of the compressor starts to be adjusted or when the target working frequency $f_n$ is obtained through adjustment, and then obtaining a rotational speed of the outdoor fan according to the high pressure and obtaining a rotational speed of the indoor fan according to the temperature. In this embodiment of the present invention, after the target working frequency $f_n$ of the compressor is obtained according to the temperature difference load of the evaporator and the PID algorithm, a target cooling capacity $Q_n$ of the compressor is directly obtained according to a target cooling capacity function of the compressor and in combination with a condensing temperature $T_{cn}$, an evaporating temperature $T_{en}$, and the target working frequency $f_n$ of the compressor in a current status. The condensing temperature $T_{cn}$ is a temperature of a refrigerant in a condenser, and the evaporating temperature $T_{en}$ is a temperature of the refrigerant in the compressor. A target power $W_1$ of the compressor is obtained according to a power function of the compressor and in combination with the condensing temperature $T_{cn}$, the evaporating temperature $T_{en}$, and the target working frequency $f_n$ of the compressor in the current status. A target power $W_2$ of the condenser is obtained according to a power function of the condenser and in combination with the condensing temperature $T_{cn}$, the evaporating temperature $T_{en}$, and $f_n$ in the current status, a temperature difference $\Delta t_1$ between an inlet and an outlet of the condenser, and a rotational speed M of the condenser. The rotational speed M of the condenser is obtained by a pressure sensor according to pressure of the refrigerant at a front end of the condenser. A target power $W_3$ of the evaporator is obtained according to a power function of the evaporator and in combination with the condensing temperature $T_{cn}$, the evaporating temperature $T_{en}$, and the target working frequency $f_n$ of the compressor in the current status, a temperature difference $\Delta t_2$ between the inlet and the outlet of the evaporator, and a rotational speed N of the evaporator.

In a range of $Q_n(\pm a\%+1)$, the target working frequency $f_n$, the condensing temperature $T_{cn}$, and the evaporating temperature $T_{en}$ are optimized respectively in specified ranges according to a coefficient of performance (COP) function of the air conditioner, so as to obtain a target working frequency $f_n d$, a target condensing temperature $T_{cn}d$, and a target evaporating temperature $T_{en}d$ when a COP value is maximum, where a is a preset natural number. Using a model as an example, optimization ranges of f, $T_c$, and $T_e$ are:

the optimization range of f: $\pm 5$ Hz;
the optimization range of $T_c$: $\pm 2°C$; and
the optimization range of $T_e$: $\pm 2°C$.

The rotational speed N of the evaporator is adjusted according to a target temperature difference between the inlet and the outlet of the evaporator, the compressor is controlled to run at the target working frequency $f_n d$, and the rotational speed M of the condenser is adjusted according to the target condensing temperature $T_{cn}$d of the condenser. The target temperature difference between the inlet and the outlet of the evaporator is $\Delta t_2 - (T_{en}d - T_{en})$.

Beneficial effects: by using a target of optimizing an overall coefficient of performance (COP) of an air conditioner system, a target working frequency $f_n$d, a target condensing temperature $T_{cn}$d, and a target evaporating temperature $T_{en}$d when a COP value is maximum are obtained, so that a technical solution of linkage control over rotational speeds of indoor and outdoor fans is implemented, and when the rotational speeds of the fans match a heat exchange capacity requirement, technical effects of fast adjustment and control, a low delay, and an optimum overall coefficient of performance of the air conditioner system are achieved.

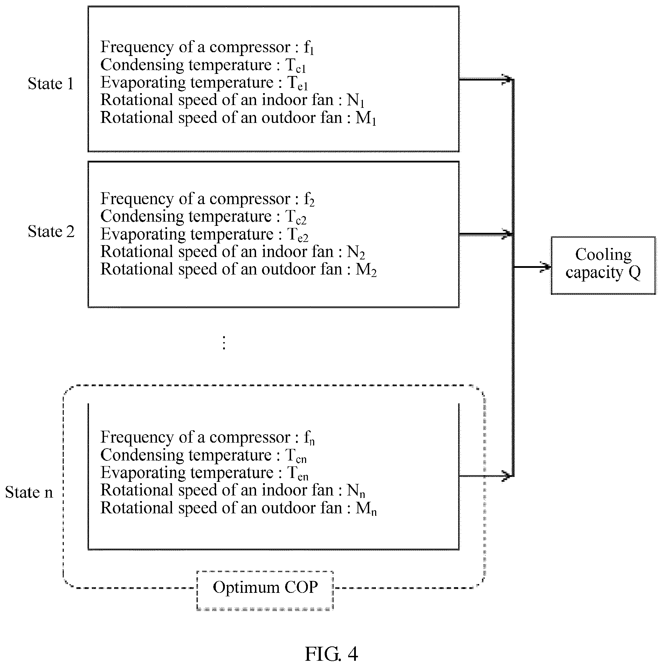

FIG. 4 is a diagram of an implementation principle of another linkage control method for indoor and outdoor units of a precision air conditioner according to an embodiment of the present invention. In the figure, an outdoor fan is a fan of a condenser, and an indoor fan is a fan of an evaporator.

A working state of a precision air conditioner system is determined by a combination of state parameters such as a working frequency f of a compressor, a condensing temperature $T_c$, an evaporating temperature $T_e$, a rotational speed M of an outdoor fan, and a rotational speed N of an indoor fan. As shown in FIG. 4, when a cooling capacity of an air conditioning unit is Q, there are n different combinations of working states for the unit: $(f_1, T_{c1}, T_{e1}, N_1, M_1)$ ... $(f_n, T_{cn}, T_{en}, N_n, M_n)$. The working states are corresponding to different system COPs, and in all the combinations, only one state combination $(f_n, T_{cn}, T_{en}, N_n, M_n)$ is corresponding to an optimum coefficient of performance (COP) value of the air conditioner. Using a model as an example, optimization ranges of f, $T_c$, and $T_e$ are:

the optimization range of f: $\pm 5$ Hz;
the optimization range of $T_c$: $\pm 2°C$; and
the optimization range of $T_e$: $\pm 2°C$.

In the present invention, a specified range is set for each parameter, and in the various states of the air conditioner or the air conditioning unit, when the coefficient of performance (COP) value of the air conditioner is optimum, a value of each parameter is obtained. The rotational speed N of the evaporator is adjusted according to a target temperature difference between an inlet and an outlet of the evaporator, the compressor is controlled to run at a target working frequency $f_n$d, and the rotational speed M of the condenser is adjusted according to a target condensing temperature $T_{cn}$d of the condenser. The target temperature difference between the inlet and the outlet of the evaporator is $\Delta t_2 - (T_{en}d - T_{en})$. Therefore, a target coefficient of performance of the air conditioner becomes optimum.

Beneficial effects: by using a target of optimizing an overall coefficient of performance (COP) of an air conditioner system, a target working frequency $f_n$d, a target condensing temperature $T_{cn}$d, and a target evaporating temperature $T_{en}$d when a COP value is maximum are obtained, so that a technical solution of linkage control over rotational speeds of indoor and outdoor fans is implemented, and, when the rotational speeds of the fans match a heat exchange capacity requirement, technical effects of fast adjustment and control, a low delay, and an optimum overall coefficient of performance of the air conditioner system are achieved.

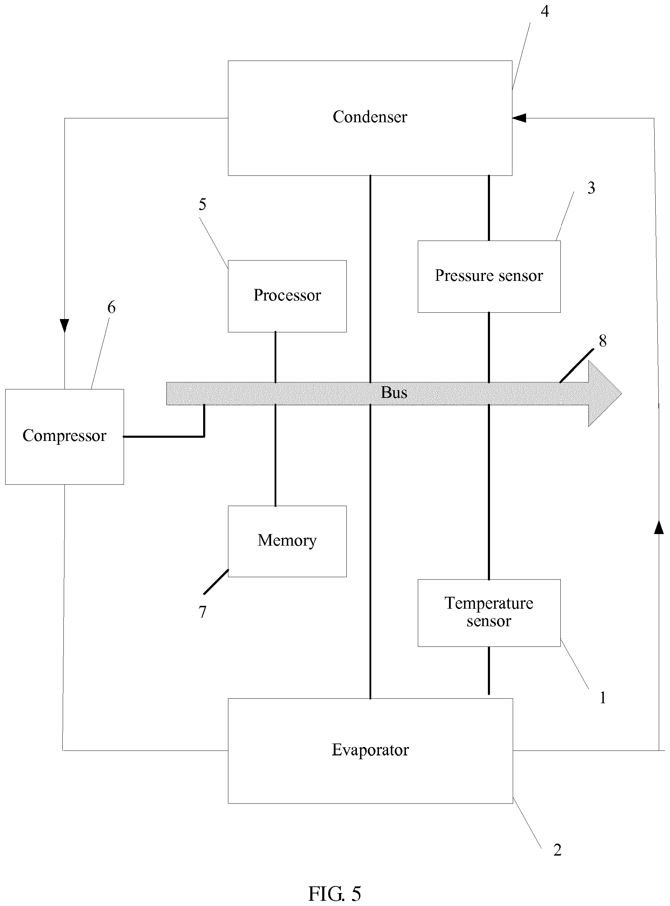

FIG. 5 is a diagram of an internal implementation principle of a linkage control apparatus for indoor and outdoor units of a precision air conditioner according to an embodiment of the present invention. The apparatus includes:

a temperature sensor (1), configured to obtain an air temperature difference between an inlet and an outlet of an evaporator (2);
a pressure sensor (3), configured to obtain pressure of a refrigerant at a front end of a condenser (4), so as to adjust a rotational speed M of a fan of the condenser (4);
a processor (5), configured to obtain a target working frequency $f_n$ of a compressor (6) according to temperature difference load of the evaporator (2) and a PID algorithm, where the temperature difference load is a product of an air volume of the evaporator (2), the air temperature difference between the inlet and the outlet of the evaporator (2), and an air specific heat capacity, where the air volume of the evaporator (2) is a volume of air that flows through the evaporator (2) per unit time, where
the processor (5) is further configured to obtain a target cooling capacity $Q_n$ of the compressor according to a target cooling capacity function of the compressor (6) and in combination with a condensing temperature $T_{cn}$, an evaporating temperature $T_{en}$, and the target working frequency $f_n$ of the compressor in a current status, where the condensing temperature $T_{cn}$ is a temperature of the refrigerant in the condenser (4), and the evaporating temperature $T_{en}$ is a temperature of the refrigerant in the compressor (6);
the processor (5) is further configured to obtain a target power $W_1$ of the compressor (6) according to a power function of the compressor (6) and in combination with the condensing temperature $T_{cn}$, the evaporating temperature $T_{en}$, and $f_n$ in the current status;
the processor (5) is further configured to obtain a target power $W_2$ of the condenser (4) according to a power function of the condenser (4) and in combination with the condensing temperature $T_{cn}$, the evaporating temperature $T_{en}$, and the target working frequency $f_n$ of the compressor in the current status, a temperature difference $\Delta t_1$ between an inlet and an outlet of the condenser (4), and the rotational speed M of the condenser (4);

the processor (5) is further configured to obtain a target power $W_3$ of the evaporator (2) according to a power function of the evaporator (2) and in combination with the condensing temperature $T_{cn}$, the evaporating temperature $T_{en}$, and the target working frequency $f_n$ of the compressor in the current status, a temperature difference $\Delta t_2$ between the inlet and the outlet of the evaporator (2), and a rotational speed N of the evaporator (2), where the rotational speed N of the evaporator (2) is determined by the temperature sensor (1) according to the air temperature difference between the inlet and the outlet of the evaporator (2);

the processor (5) is further configured to: optimize, in a range of $Q_n(\pm a\%+1)$, the target working frequency $f_n$, the condensing temperature $T_{cn}$, and the evaporating temperature $T_{en}$ respectively in specified ranges according to a coefficient of performance (COP) function of the air conditioner, so as to obtain a target working frequency $f_n d$, a target condensing temperature $T_{cn}d$, and a target evaporating temperature $T_{en}d$ when a COP value is maximum, where a is a preset natural number; and

the processor (5) is further configured to adjust the rotational speed N of the evaporator (2) according to a target temperature difference between the inlet and the outlet of the evaporator (2), control the compressor (6) to run at the target working frequency $f_n d$, and adjust the rotational speed M of the condenser (4) according to the target condensing temperature $T_{cn}d$ of the condenser (4), where the target temperature difference between the inlet and the outlet of the evaporator (2) is $\Delta t_2 - (T_{en}d - T_{en})$; and

a memory (7), configured to store the foregoing data and programs.

The foregoing apparatuses and modules are connected by using a bus (8).

Beneficial effects: by using a target of optimizing an overall coefficient of performance (COP) of an air conditioner system, a target working frequency $f_n d$, a target condensing temperature $T_{cn}d$, and a target evaporating temperature $T_{en}d$ when a COP value is maximum are obtained, so that a technical solution of linkage control over rotational speeds of indoor and outdoor fans is implemented, and when the rotational speeds of the fans match a heat exchange capacity requirement, technical effects of fast adjustment and control, a low delay, and an optimum overall coefficient of performance of the air conditioner system are achieved.

Further, the optimizing, in a range of $Q_n(\pm a\%+1)$, the target working frequency $f_n$, the condensing temperature $T_{cn}$, and the evaporating temperature $T_{en}$ respectively in specified ranges according to a coefficient of performance (COP) function of the air conditioner, so as to obtain a target working frequency $f_n d$,

a target condensing temperature $T_{cn}d$, and a target evaporating temperature $T_{en}d$ when a COP value is maximum specifically includes:

the processor (5) is configured to: optimizing, in the range of $Q_n(\pm a\%+1)$, the target working frequency $f_n$, the condensing temperature $T_{cn}$, and the evaporating temperature $T_{en}$ respectively in ranges $f_n \pm b$ Hz, $T_{cn} \pm c°C$, and $T_{en} \pm d°C$ according to the coefficient of performance (COP) function of the air conditioner, so as to obtain the target working frequency $f_n d$, the target condensing temperature $T_{cn}d$, and the target evaporating temperature $T_{en}d$ when the COP value is the maximum, where a, b, and c are preset constants.

Using a model as an example, optimization ranges of f, $T_c$, and $T_e$ are:

the optimization range of f: $\pm 5$ Hz;
the optimization range of $T_c$: $\pm 2°C$; and
the optimization range of $T_e$: $\pm 2°C$.

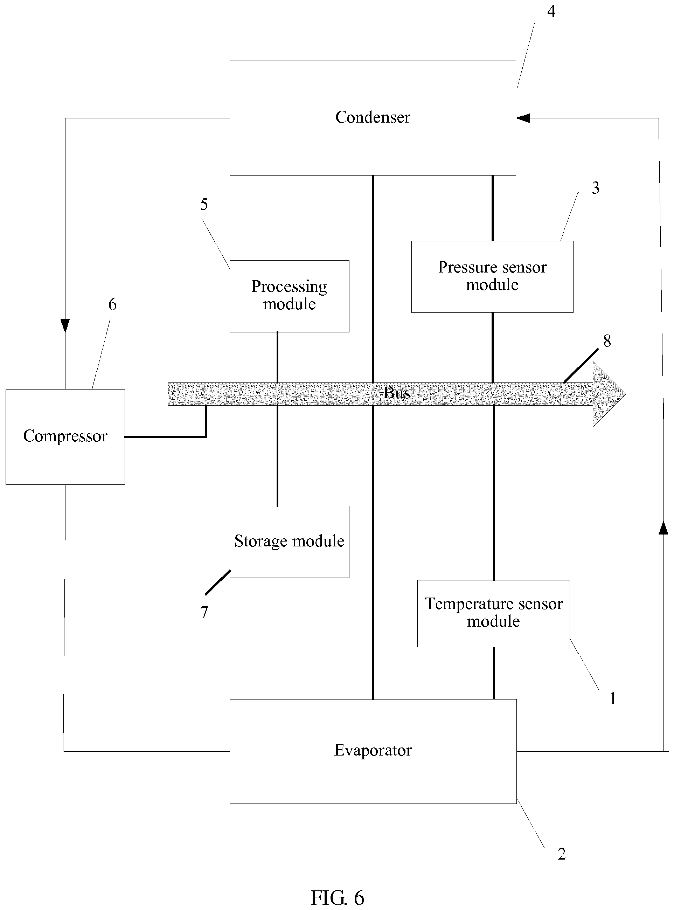

FIG. 6 is a diagram of an internal implementation principle of another linkage control apparatus for indoor and outdoor units of a precision air conditioner according to an embodiment of the present invention. The apparatus includes:

a temperature sensor module (1), configured to obtain an air temperature difference between an inlet and an outlet of an evaporator (2);

a pressure sensor module (3), configured to obtain pressure of a refrigerant at a front end of a condenser (4), so as to adjust a rotational speed M of a fan of the condenser (4);

a processing module (5), configured to obtain a target working frequency $f_n$ of a compressor (6) according to temperature difference load of the evaporator (2) and a PID algorithm, where the temperature difference load is a product of an air volume of the evaporator (2), the air temperature difference between the inlet and the outlet of the evaporator (2), and an air specific heat capacity, where the air volume of the evaporator (2) is a volume of air that flows through the evaporator (2) per unit time, where

the processing module (5) is further configured to obtain a target cooling capacity $Q_n$ of the compressor according to a target cooling capacity function of the compressor (6) and in combination with a condensing temperature $T_{cn}$, an evaporating temperature $T_{en}$, and the target working frequency $f_n$ of the compressor in a current status, where the condensing temperature $T_{cn}$ is a temperature of the refrigerant in the condenser (4), and the evaporating temperature $T_{en}$ is a temperature of the refrigerant in the compressor (6);

the processing module (5) is further configured to obtain a target power $W_1$ of the compressor (6) according to a power function of the compressor (6) and in combination with the condensing temperature

$T_{cn}$, the evaporating temperature $T_{en}$, and the target working frequency $f_n$ of the compressor in the current status;

the processing module (5) is further configured to obtain a target power $W_2$ of the condenser (4) according to a power function of the condenser (4) and in combination with the condensing temperature $T_{cn}$, the evaporating temperature $T_{en}$, and the target working frequency $f_n$ of the compressor in the current status, a temperature difference $\Delta t_1$ between an inlet and an outlet of the condenser (4), and the rotational speed M of the condenser (4);

the processing module (5) is further configured to obtain a target power $W_3$ of the evaporator (2) according to a power function of the evaporator (2) and in combination with the condensing temperature $T_{cn}$, the evaporating temperature $T_{en}$, and the target working frequency $f_n$ of the compressor in the current status, a temperature difference $\Delta t_2$ between the inlet and the outlet of the evaporator (2), and a rotational speed N of the evaporator (2), where the rotational speed N of the evaporator (2) is determined by the temperature sensor module (1) according to the air temperature difference between the inlet and the outlet of the evaporator (2);

the processing module (5) is further configured to: optimize, in a range of $Q_n(\pm a\%+1)$, the target working frequency $f_n$, the condensing temperature $T_{cn}$, and the evaporating temperature $T_{en}$ respectively in specified ranges according to a coefficient of performance (COP) function of the air conditioner, so as to obtain a target working frequency $f_n d$, a target condensing temperature $T_{cn}d$, and a target evaporating temperature $T_{en}d$ when a COP value is maximum, where a is a preset natural number; and

the processing module (5) is further configured to adjust the rotational speed N of the evaporator (2) according to a target temperature difference between the inlet and the outlet of the evaporator (2), control the compressor (6) to run at the target working frequency $f_n d$, and adjust the rotational speed M of the condenser (4) according to the target condensing temperature $T_{cn}d$ of the condenser (4), where the target temperature difference between the inlet and the outlet of the evaporator (2) is $\Delta t_2$-($T_{en}d$-$T_{en}$); and specifically, to adjust and control the rotational speeds of the fans, in a precision air conditioner system, a pressure sensor is installed at an inlet end of the condenser, so as to detect pressure of a high-pressure gaseous refrigerant transmitted from the compressor (therefore, the pressure sensor is also referred to as a high-pressure sensor); a larger pressure value detected by the sensor indicates a higher saturation temperature of the refrigerant under the pressure, and further a higher heat exchange capacity that needs to be implemented by a heat exchanger, so that the rotational speed of the fan of the condenser needs to be increased; otherwise, the rotational speed of the fan needs to be decreased; for an evaporator, temperature sensors are installed at an inlet and an outlet that are along an air flow direction, so as to detect a temperature difference between air entering and air leaving the evaporator; for the evaporator, a product of an air specific heat capacity, an air temperature difference between the inlet and the outlet, and an air volume approximates to a constant; and a smaller air temperature difference between the inlet and the outlet indicates a relatively greater air volume, so that the rotational speed of the fan of the evaporator needs to be decreased; otherwise, the rotational speed of the fan of the evaporator needs to be increased; and

a storage module (7), configured to store the foregoing data and programs.

The foregoing apparatuses and modules are connected by using a bus (8).

Beneficial effects: by using a target of optimizing an overall coefficient of performance (COP) of an air conditioner system, a target working frequency $f_n d$, a target condensing temperature $T_{cn}d$, and a target evaporating temperature $T_{en}d$ when a COP value is maximum are obtained, so that a technical solution of linkage control over rotational speeds of indoor and outdoor fans is implemented, and when the rotational speeds of the fans match a heat exchange capacity requirement, technical effects of fast adjustment and control, a low delay, and an optimum overall coefficient of performance of the air conditioner system are achieved.

Further, the optimizing, in a range of $Q_n(\pm a\%+1)$, the target working frequency $f_n$, the condensing temperature $T_{cn}$, and the evaporating temperature $T_{en}$ respectively in specified ranges according to a coefficient of performance (COP) function of the air conditioner, so as to obtain a target working frequency $f_n d$, a target condensing temperature $T_{cn}d$, and a target evaporating temperature $T_{en}d$ when a COP value is maximum specifically includes:

the processing module (5) is configured to: optimizing, in the range of $Q_n(\pm a\%+1)$, the target working frequency $f_n$, the condensing temperature $T_{cn}$, and the evaporating temperature $T_{en}$ respectively in ranges $f_n\pm b$ Hz, $T_{cn}\pm c°C$, and $T_{en}\pm d°C$ according to the coefficient of performance (COP) function of the air conditioner, so as to obtain the target working frequency $f_n d$, the target condensing temperature $T_{cn}d$, and the target evaporating temperature $T_{en}d$ when the COP value is the maximum, where a, b, and c are preset constants.

Using a model as an example, optimization ranges of f, $T_c$, and $T_e$ are:

the optimization range of f: $\pm 5$ Hz;
the optimization range of $T_c$: $\pm 2°C$; and
the optimization range of $T_e$: $\pm 2°C$.

The present invention may be implemented in a plurality of implementation manners. The embodiments of the present invention may be executed by a specific software or hardware component. A person skilled in the art considers that different software or hardware combinations may also be applied to execute the embodiments of the present invention, and that the specific operations executed by hardware may also be implemented by software.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of the embodiments of the present invention The scope of protection of the present invention is however merely defined by the appended claims.

## Claims

1. A linkage control method for indoor and outdoor units of a precision air conditioner, **characterized by** comprising:

obtaining (Sioi) temperature difference load of an evaporator and obtaining, according to a PID algorithm, a target working frequency $f_n$ of a compressor, wherein the temperature difference load is a product of an air volume of the evaporator, an air temperature difference between an inlet and an outlet of the evaporator, and an air specific heat capacity, wherein the air volume of the evaporator is a volume of air that flows through the evaporator per unit time;

obtaining (S102) a target cooling capacity $Q_n$ according to a target cooling capacity function and in combination with a condensing temperature $T_{cn}$, an evaporating temperature $T_{en}$, and the target working frequency $f_n$ of the compressor in a current status, wherein the condensing temperature $T_{cn}$ is a temperature of a refrigerant in a condenser, and the evaporating temperature $T_{en}$ is a temperature of the refrigerant in the compressor; obtaining a target power $W_1$ of the compressor according to a power function of the compressor and in combination with the condensing temperature $T_{cn}$, the evaporating temperature $T_{en}$, and the target working frequency $f_n$ of the compressor in the current status; obtaining a target power $W_2$ of the condenser according to a power function of the condenser and in combination with the condensing temperature $T_{cn}$, the evaporating temperature $T_{en}$, and the target working frequency $f_n$ of the compressor in the current status, a temperature difference $\Delta t_1$ between an inlet air temperature and an outlet air temperature of the condenser, and a rotational speed M of a fan of the condenser, wherein the rotational speed M of a fan of the condenser is obtained by a pressure sensor according to pressure of the refrigerant at a front end of the condenser; and obtaining a target power $W_3$ of the evaporator according to a power function of the evaporator and in combination with the condensing temperature $T_{cn}$, the evaporating temperature $T_{en}$, and the target working frequency $f_n$ of the compressor in the current status, a temperature difference $\Delta t_2$ between the inlet's air temperature and the outlet's air temperature of the evaporator, and a rotational speed N of a fan of the evaporator; the value of coefficient of performance (COP) in the current status of the air conditioner is: $COP = Q_n/(W_1 + W_2 + W_3)$;

optimizing (S103), in a range of $Q_n(\pm a\% + 1)$, the target working frequency $f_n$, the condensing temperature $T_{cn}$, and the evaporating temperature $T_{en}$ respectively in specified ranges according to a coefficient of performance (COP) function of the air conditioner, so as to obtain a target working frequency $f_n d$, a target condensing temperature $T_{cn} d$, and a target evaporating temperature $T_{en} d$ when a COP value is maximum, wherein the 'a' is a preset natural number; and

adjusting (S104) the rotational speed N of a fan of the evaporator according to a target temperature difference between the inlet air temperature and the outlet air temperature of the evaporator, controlling the compressor to run at the target working frequency $f_n d$, and adjusting the rotational speed M of a fan of the condenser according to the target condensing temperature $T_{cn} d$ of the condenser, wherein the target temperature difference between the inlet and the outlet of the evaporator is $\Delta t_2 - (T_{en} d - T_{en})$.

2. The method according to claim 1, wherein the optimizing (S103), in the range of $Q_n(\pm a\% + 1)$, the target working frequency $f_n$, the condensing temperature $T_{cn}$, and the evaporating temperature $T_{en}$ respectively in specified ranges according to the coefficient of performance (COP) function of the air conditioner, so as to obtain the target working frequency $f_n d$, the target condensing temperature $T_{cn} d$, and the target evaporating temperature $T_{en} d$ when the COP value is maximum specifically comprises: optimizing (S103), in the range of $Q_n(\pm a\% + 1)$, the target working frequency $f_n$, the condensing temperature $T_{cn}$, and the evaporating temperature $T_{en}$ respectively in ranges $f_n \pm b$ Hz,

$T_{cn} \pm c°C$, and $T_{en} \pm d°C$ according to the coefficient of performance (COP) function of the air conditioner, so as to obtain the target working frequency $f_n d$, the target condensing temperature $T_{cn} d$, and the target evaporating temperature $T_{en} d$ when the COP value is the maximum, wherein a, b, and c are preset constants.

3. A linkage control apparatus for indoor and outdoor units of a precision air conditioner, comprising:

a temperature sensor (1), configured to obtain an air temperature difference between an inlet and an outlet of an evaporator (2);
a pressure sensor (3), configured to obtain pressure of a refrigerant at a front end of a condenser (4), so as to adjust a rotational speed M of a fan of the condenser (4);
a processor (5), **characterized in that** the processor (5) is configured to obtain a target working frequency $f_n$ of a compressor (6) according to temperature difference load of the evaporator (2) and a PID algorithm, wherein the temperature difference load is a product of an air volume of the evaporator (2), the air temperature difference between the inlet and the outlet of the evaporator (2), and an air specific heat capacity, wherein the air volume of the evaporator (2) is a volume of air that flows through the evaporator (2) per unit time, wherein the processor (5) is further configured to obtain a target cooling capacity $Q_n$ according to a target cooling capacity function and in combination with a condensing temperature $T_{cn}$, an evaporating temperature $T_{en}$, and the target working frequency $f_n$ of the compressor (6) in a current status, wherein the condensing temperature $T_{cn}$ is a temperature of the refrigerant in the condenser (4), and the evaporating temperature $T_{en}$ is a temperature of the refrigerant in the compressor (6);
the processor (5) is further configured to obtain a target power $W_1$ of the compressor (6) according to a power function of the compressor (6) and in combination with the condensing temperature $T_{cn}$, the evaporating temperature $T_{en}$, and the target working frequency $f_n$ of the compressor (6) in the current status;
the processor (5) is further configured to obtain a target power $W_2$ of the condenser (4) according to a power function of the condenser (4) and in combination with the condensing temperature $T_{cn}$, the evaporating temperature $T_{en}$, and the target working frequency $f_n$ of the compressor (6) in the current status, a temperature difference $\Delta t_1$ between an inlet's air temperature and an outlet's air temperature of the condenser (4), and the rotational speed M of a fan of the condenser (4);

the processor (5) is further configured to obtain a target power $W_3$ of the evaporator (2) according to a power function of the evaporator (2) and in combination with the condensing temperature $T_{cn}$, the evaporating temperature $T_{en}$, and the target working frequency $f_n$ of the compressor (6) in the current status, a temperature difference $\Delta t_2$ between the inlet air temperature and the outlet air temperature of the evaporator (2), and a rotational speed N of a fan of the evaporator (2), wherein the rotational speed N of a fan of the evaporator (2) is determined by the temperature sensor (1) according to the air temperature difference between the inlet and the outlet of the evaporator (2); wherein the value of coefficient of performance (COP) in the current status of the air conditioner is: $COP = Q_n/(W_1 + W_2 + W_3)$;
the processor (5) is further configured to: optimize, in a range of $Q_n(\pm a\% + 1)$, the target working frequency $f_n$, the condensing temperature $T_{cn}$, and the evaporating temperature $T_{en}$ respectively in specified ranges according to a coefficient of performance (COP) function of the air conditioner, so as to obtain a target working frequency $f_n d$, a target condensing temperature $T_{cn} d$, and a target evaporating temperature $T_{en} d$ when a COP value is maximum, wherein the 'a' is a preset natural number; and
the processor (5) is further configured to adjust the rotational speed N of a fan of the evaporator (2) according to a target temperature difference between the inlet and the outlet of the evaporator (2), control the compressor (6) to run at the target working frequency $f_n d$, and adjust the rotational speed M of a fan of the condenser (4) according to the target condensing temperature $T_{cn} d$ of the condenser (4), wherein the target temperature difference between the inlet air temperature and the outlet air temperature of the evaporator (2) is $\Delta t_2 - (T_{en} d - T_{en})$; and
a memory (7), configured to store the foregoing data and programs.

4. The apparatus according to claim 3, wherein the optimizing, in the range of $Q_n(\pm a\% + 1)$, the target working frequency $f_n$, the condensing temperature $T_{cn}$, and the evaporating temperature $T_{en}$ respectively in specified ranges according to the coefficient of performance (COP) function of the air conditioner, so as to obtain the target working frequency $f_n d$, the target condensing temperature $T_{cn} d$, and the target evaporating temperature $T_{en} d$ when the COP value is maximum specifically comprises: optimizing, in the range of $Q_n(\pm a\% + 1)$, the target working frequency $f_n$, the condensing temperature $T_{cn}$, and the evaporating temperature $T_{en}$ respectively in ranges $f_n \pm b$ Hz, $T_{cn} \pm c°C$, and $T_{en} \pm d°C$ according to the coefficient of performance (COP) function of the air conditioner, so as to obtain the target working frequency $f_n$d, the target condensing temperature $T_{cn}$d, and the target evaporating temperature $T_{en}$d when the COP value is the maximum, wherein a, b, and c are preset constants.

**Patentansprüche**

1. Verbindungssteuerungsverfahren für Innen- und Außeneinheiten einer Präzisionsklimaanlage, das **dadurch gekennzeichnet ist, dass** es Folgendes umfasst:

Erhalten (S101) einer Temperaturdifferenzlast eines Verdampfers und Erhalten, gemäß einem PID-Algorithmus, einer Sollarbeitsfrequenz $f_n$ eines Kompressors, wobei es sich bei der Temperaturdifferenzlast um ein Produkt eines Luftvolumens des Verdampfers, einer Lufttemperaturdifferenz zwischen einem Einlass und einem Auslass des Verdampfers und einer luftspezifischen Wärmekapazität handelt, wobei es sich bei dem Luftvolumen des Verdampfers um ein Volumen an Luft handelt, das pro Zeiteinheit durch den Verdampfer strömt;
Erhalten (S102) einer Sollkühlkapazität $Q_n$ gemäß einer Sollkühlkapazitätsfunktion und in Kombination mit einer Kondensationstemperatur $T_{cn}$, einer Verdampfungstemperatur $T_{en}$ und der Sollarbeitsfrequenz $f_n$ des Kompressors in einem aktuellen Zustand, wobei es sich bei der Kondensationstemperatur $T_{cn}$ um eine Temperatur eines Kältemittels in einem Kondensator und bei der Verdampfungstemperatur $T_{en}$ um eine Temperatur des Kältemittels in dem Kompressor handelt; Erhalten einer Sollleistung $W_1$ des Kompressors gemäß einer Leistungsfunktion des Kompressors und in Kombination mit der Kondensationstemperatur $T_{cn}$, der Verdampfungstemperatur $T_{en}$ und der Sollarbeitsfrequenz $f_n$ des Kompressors im aktuellen Zustand; Erhalten einer Sollleistung $W_2$ des Kondensators gemäß einer Leistungsfunktion des Kondensators und in Kombination mit der Kondensationstemperatur $T_{cn}$, der Verdampfungstemperatur $T_{en}$ und der Sollarbeitsfrequenz $f_n$ des Kompressors im aktuellen Zustand, einer Temperaturdifferenz $\Delta t_1$ zwischen einer Einlasslufttemperatur und einer Auslasslufttemperatur des Kondensators und einer Drehzahl M eines Lüfters des Kondensators, wobei die Drehzahl M eines Lüfters des Kondensators durch einen Drucksensor gemäß dem Druck des Kältemittels an einem vorderen Ende des Kondensators erhalten wird; und
Erhalten einer Sollleistung $W_3$ des Verdampfers gemäß einer Leistungsfunktion des Verdampfers und in Kombination mit der Kondensationstemperatur $T_{cn}$, der Verdampfungstemperatur $T_{en}$ und der Sollarbeitsfrequenz $f_n$ des Kompressors im aktuellen Zustand, einer Temperaturdifferenz $\Delta t_2$ zwischen der Lufttemperatur des Einlasses und der Lufttemperatur des Auslasses des Verdampfers und einer Drehzahl N eines Lüfters des Verdampfers; wobei der Wert des Leistungskoeffizienten (coefficient of performance - COP) im aktuellen Zustand der Klimaanlage Folgendem entspricht:

$$COP=Q_n\,/\,(W_1+W_2+W_3)\,;$$

Optimieren (S103), in einem Bereich von $Q_n(\pm a\%+1)$, der Sollarbeitsfrequenz $f_n$, der Kondensationstemperatur $T_{cn}$ und der Verdampfungstemperatur $T_{en}$ jeweils in spezifischen Bereichen gemäß einer Leistungskoeffizient(COP)-Funktion der Klimaanlage, um so eine Sollarbeitsfrequenz $f_n$d, eine Sollkondensationstemperatur $T_{cn}$d und eine Sollverdampfungstemperatur $T_{en}$d bei maximalem COP-Wert zu erhalten, wobei das 'a' für eine voreingestellte natürliche Zahl steht; und
Einstellen (S104) der Drehzahl N eines Lüfters des Verdampfers gemäß einer Solltemperaturdifferenz zwischen der Einlasslufttemperatur und der Auslasslufttemperatur des Verdampfers, Steuern des Kompressors derart, dass er mit der Sollarbeitsfrequenz $f_n$d läuft, und Einstellen der Drehzahl M eines Lüfters des Kondensators gemäß der Sollkondensationstemperatur $T_{cn}$d des Kondensators, wobei die Solltemperaturdifferenz zwischen dem Einlass und dem Auslass des Verdampfers Folgendem entspricht: $\Delta t_2$-($T_{en}$d-$T_{en}$).

2. Verfahren nach Anspruch 1, wobei das Optimieren (S103), in dem Bereich von $Q_n(\pm a\%+1)$, der Sollarbeitsfrequenz $f_n$, der Kondensationstemperatur $T_{cn}$ und der Verdampfungstemperatur $T_{en}$ jeweils in spezifischen Bereichen gemäß der Leistungskoeffizient(COP)-Funktion der Klimaanlage, um so die Sollarbeitsfrequenz $f_n$d, die Sollkondensationstemperatur $T_{cn}$d und die Sollverdampfungstemperatur $T_{en}$d bei dem maximalen COP-Wert zu erhalten, insbesondere Folgendes umfasst: Optimieren (S103), in dem Bereich von $Q_n(\pm a\%+1)$, der Sollarbeitsfrequenz $f_n$, der Kondensationstemperatur $T_{cn}$ und der Verdampfungstemperatur $T_{en}$ jeweils in den Bereichen $f_n\pm b$ Hz, $T_{cn}\pm c$ °C und $T_{en}\pm d$ °C gemäß der Leistungskoeffizient(COP)-Funktion der Klimaanlage, um so die Sollarbeitsfrequenz $f_n$d, die Sollkondensationstemperatur $T_{cn}$d und die Sollverdampfungstemperatur $T_{en}$d bei dem maximalen COP-Wert zu erhalten, wobei a, b und c für voreingestellte Konstanten stehen.

3. Verbindungssteuerungsvorrichtung für Innen- und Außeneinheiten einer Präzisionsklimaanlage, umfassend:

einen Temperatursensor (1), der dazu konfiguriert ist, eine Lufttemperaturdifferenz zwischen einem Einlass und einem Auslass eines Verdampfers (2) zu erhalten;
einen Drucksensor (3), der dazu konfiguriert ist, einen Druck eines Kältemittels an einem vorderen Ende eines Kondensators (4) zu erhalten, um so eine Drehzahl M eines Lüfters des Kondensators (4) einzustellen;
einen Prozessor (5), **dadurch gekennzeichnet, dass** der Prozessor (5) dazu konfiguriert ist, eine Sollarbeitsfrequenz $f_n$ eines Kompressors (6) gemäß einer Temperaturdifferenzlast des Verdampfers (2) und einem PID-Algorithmus zu erhalten, wobei es sich bei der Temperaturdifferenzlast um ein Produkt eines Luftvolumens des Verdampfers (2), der Lufttemperaturdifferenz zwischen dem Einlass und dem Auslass des Verdampfers (2) und einer luftspezifischen Wärmekapazität handelt, wobei es sich bei dem Luftvolumen des Verdampfers (2) um ein Volumen an Luft handelt, das pro Zeiteinheit durch den Verdampfer (2) strömt, wobei
der Prozessor (5) ferner dazu konfiguriert ist, eine Sollkühlkapazität $Q_n$ gemäß einer Sollkühlkapazitätsfunktion und in Kombination mit einer Kondensationstemperatur $T_{cn}$, einer Verdampfungstemperatur $T_{en}$ und der Sollarbeitsfrequenz $f_n$ des Kompressors (6) in einem aktuellen Zustand zu erhalten, wobei es sich bei der Kondensationstemperatur $T_{cn}$ um eine Temperatur des Kältemittels in dem Kondensator (4) und bei der Verdampfungstemperatur $T_{en}$ um eine Temperatur des Kältemittels in dem Kompressor (6) handelt;
der Prozessor (5) ferner dazu konfiguriert ist, eine Sollleistung $W_1$ des Kompressors (6) gemäß einer Leistungsfunktion des Kompressors (6) und in Kombination mit der Kondensationstemperatur $T_{cn}$, der Verdampfungstemperatur $T_{en}$ und der Sollarbeitsfrequenz $f_n$ des Kompressors (6) im aktuellen Zustand zu erhalten;
der Prozessor (5) ferner dazu konfiguriert ist, eine Sollleistung $W_2$ des Kondensators (4) gemäß einer Leistungsfunktion des Kondensators (4) und in Kombination mit der Kondensationstemperatur $T_{cn}$, der Verdampfungstemperatur $T_{en}$ und der Sollarbeitsfrequenz $f_n$ des Kompressors (6) im aktuellen Zustand, einer Temperaturdifferenz $\Delta t_1$ zwischen der Lufttemperatur ei-

nes Einlasses und der Lufttemperatur eines Auslasses des Kondensators (4) und der Drehzahl M eines Lüfters des Kondensators (4) zu erhalten;
der Prozessor (5) ferner dazu konfiguriert ist, eine Sollleistung $W_3$ des Verdampfers (2) gemäß einer Leistungsfunktion des Verdampfers (2) und in Kombination mit der Kondensationstemperatur $T_{cn}$, der Verdampfungstemperatur $T_{en}$ und der Sollarbeitsfrequenz $f_n$ des Kompressors (6) im aktuellen Zustand, einer Temperaturdifferenz $\Delta t_2$ zwischen der Einlasslufttemperatur und der Auslasslufttemperatur des Verdampfers (2) und einer Drehzahl N eines Lüfters des Verdampfers (2) zu erhalten, wobei die Drehzahl N eines Lüfters des Verdampfers (2) durch den Temperatursensor (1) gemäß der Lufttemperaturdifferenz zwischen dem Einlass und dem Auslass des Verdampfers (2) bestimmt wird; wobei der Wert des Leistungskoeffizienten (coefficient of performance - COP) im aktuellen Zustand der Klimaanlage Folgendem entspricht:

$$COP = Q_n / (W_1 + W_2 + W_3);$$

der Prozessor (5) ferner für Folgendes konfiguriert ist: Optimieren, in einem Bereich von $Q_n(\pm a\%+1)$, der Sollarbeitsfrequenz $f_n$, der Kondensationstemperatur $T_{cn}$ und der Verdampfungstemperatur $T_{en}$ jeweils in spezifischen Bereichen gemäß einer Leistungskoeffizient(COP)-Funktion der Klimaanlage, um so eine Sollarbeitsfrequenz $f_n d$, eine Sollkondensationstemperatur $T_{cn}d$ und eine Sollverdampfungstemperatur $T_{en}d$ bei maximalem COP-Wert zu erhalten, wobei das 'a' für eine voreingestellte natürliche Zahl steht; und
der Prozessor (5) ferner dazu konfiguriert ist, die Drehzahl N eines Lüfters des Verdampfers (2) gemäß einer Solltemperaturdifferenz zwischen dem Einlass und dem Auslass des Verdampfers (2) einzustellen, den Kompressor (6) derart zu steuern, dass er mit der Sollarbeitsfrequenz $f_n d$ läuft, und die Drehzahl M eines Lüfters des Kondensators (4) gemäß der Sollkondensationstemperatur $T_{cn}d$ des Kondensators (4) einzustellen, wobei die Solltemperaturdifferenz zwischen der Einlasslufttemperatur und der Auslasslufttemperatur des Verdampfers (2) Folgendem entspricht: $\Delta t_2 - (T_{en}d - T_{en})$; und
einen Speicher (7), der dazu konfiguriert ist, die vorstehenden Daten und Programme zu speichern.

4. Vorrichtung nach Anspruch 3, wobei das Optimieren, in dem Bereich von $Q_n(\pm a\%+1)$, der Sollarbeits-

frequenz $f_n$, der Kondensationstemperatur $T_{cn}$ und der Verdampfungstemperatur $T_{en}$ jeweils in spezifischen Bereichen gemäß der Leistungskoeffizient(COP)-Funktion der Klimaanlage, um so die Sollarbeitsfrequenz $f_n$d, die Sollkondensationstemperatur $T_{cn}$d und die Sollverdampfungstemperatur $T_{en}$d bei dem maximalen COP-Wert zu erhalten, insbesondere Folgendes umfasst: Optimieren, in dem Bereich von $Q_n(\pm a\%+1)$, der Sollarbeitsfrequenz $f_n$, der Kondensationstemperatur $T_{cn}$ und der Verdampfungstemperatur $T_{en}$ jeweils in spezifischen Bereichen $f_n \pm b$ Hz, $T_{cn} \pm c$ °C und $T_{en} \pm d$ °C gemäß der Leistungskoeffizient(COP)-Funktion der Klimaanlage, um so die Sollarbeitsfrequenz $f_n$d , die Sollkondensationstemperatur $T_{cn}$d und die Sollverdampfungstemperatur $T_{en}$d bei dem maximalen COP-Wert zu erhalten, wobei a, b und c für voreingestellte Konstanten stehen.

## Revendications

1. Procédé de commande de liaison pour unités intérieures et extérieures d'un conditionneur d'air de précision, **caractérisé en ce qu'**il comprend :

   l'obtention (S101) d'un écart de charge thermique d'un évaporateur et l'obtention, en fonction d'un algorithme de PID, d'une fréquence de fonctionnement cible $f_n$ d'un compresseur, dans lequel l'écart de charge thermique est un produit d'un volume d'air de l'évaporateur, d'un écart thermique entre une entrée et une sortie de l'évaporateur, et d'une puissance calorifique d'air spécifique, dans lequel le volume d'air de l'évaporateur est un volume d'air qui s'écoule à travers l'évaporateur par unité de temps ; l'obtention (S102) d'une puissance frigorifique cible $Q_n$ selon une fonction de puissance frigorifique et en conjonction avec une température de condensation $T_{cn}$, une température d'évaporation $T_{en}$ et la fréquence de fonctionnement cible $f_n$ du compresseur dans un état en cours, dans lequel la température de condensation $T_{cn}$ est une température d'un réfrigérant dans un condenseur, et la température d'évaporation $T_{en}$ est une température du réfrigérant dans le compresseur ; l'obtention d'une puissance cible $W_1$ du compresseur selon une fonction de puissance du compresseur et en conjonction avec la température de condensation $T_{cn}$, la température d'évaporation $T_{en}$, et la fréquence de fonctionnement cible $f_n$ du compresseur dans l'état en cours ; l'obtention d'une puissance cible $W_2$ du condenseur selon une fonction de puissance du condenseur et en conjonction avec la température de condensation $T_{cn}$, la température d'évaporation $T_{en}$, et la fréquence de fonc-

tionnement cible $f_n$ du compresseur dans l'état en cours, un écart thermique $\Delta t_1$ entre une température de l'air d'entrée et une température d'air de sortie du condenseur, et une vitesse de rotation M d'un ventilateur du condenseur, dans lequel la vitesse de rotation M d'un ventilateur du condenseur est obtenue par un capteur de pression selon la pression du réfrigérant à une extrémité avant du condenseur ; et l'obtention d'une puissance cible $W_3$ de l'évaporateur selon une fonction de puissance de l'évaporateur et en conjonction avec la température de condensation $T_{cn}$, la température d'évaporation $T_{en}$, et la fréquence de fonctionnement cible $f_n$ du compresseur dans l'état en cours, un écart thermique $\Delta t_2$ entre la température de l'air d'entrée et la température de l'air de sortie de l'évaporateur, et une vitesse de rotation N d'un ventilateur de l'évaporateur ; la valeur de coefficient de performance (COP) dans l'état en cours du conditionneur d'air est :

$$COP=Q_n/(W_1+W_2+W_3) \quad ;$$

l'optimisation (S103), dans une plage de $Q_n(\pm a\%+1)$, de la fréquence de fonctionnement cible $f_n$, de la température de condensation $T_{cn}$, et de la température d'évaporation $T_{en}$ respectivement dans des plages spécifiées selon la fonction de coefficient de performance (COP) du conditionneur d'air, de manière à obtenir une fréquence de fonctionnement cible $f_n$d, une température de condensation cible $T_{cn}$d, et une température d'évaporation $T_{en}$d lorsqu'une valeur de COP est maximale, dans lequel le « a » est un entier naturel prédéfini ; et l'ajustement (S104) de la vitesse de rotation N d'un ventilateur de l'évaporateur selon un écart thermique cible entre la température de l'air d'entrée et de l'air de sortie de l'évaporateur, en commandant le compresseur pour qu'il fonctionne à une fréquence de fonctionnement cible $f_n$d, et en ajustant la vitesse de rotation M d'un ventilateur du condenseur selon la température de condensation cible $T_{en}$d du condenseur, dans lequel l'écart thermique cible entre l'entrée et la sortie de l'évaporateur est $\Delta t_2 - (T_{en}d-T_{en})$.

2. Procédé selon la revendication 1, dans lequel l'optimisation (S103), dans la plage de $Q_n(\pm a\%+1)$, de la fréquence de fonctionnement cible $f_n$, de la température de condensation $T_{en}$, et de la température d'évaporation $T_{en}$ respectivement dans des plages spécifiques selon la fonction de coefficient de performance (COP) du conditionneur d'air, de manière à obtenir la fréquence de fonctionnement cible $f_n$d, la température de condensation cible $T_{cn}$d, et la tem-

pérature d'évaporation cible $T_{en}$d lorsque la valeur de COP est maximale comprend notamment : l'optimisation (S103), dans la plage de $Q_n(\pm a\%+1)$, de la fréquence de fonctionnement cible $f_n$, de la température de condensation $T_{cn}$, et de la température d'évaporation $T_{en}$ respectivement dans des plages $f_n \pm b$ Hz, $T_{cn} \pm c$ °C, et $T_{en} \pm d$ °C selon la fonction de coefficient de performance (COP) du conditionneur d'air, de manière à obtenir la fréquence de fonctionnement cible $f_n$d, la température de condensation cible $T_{cn}$d, et la température d'évaporation cible $T_{en}$d lorsque la valeur de COP est maximale, dans lequel a, b, et c sont des constantes prédéfinies.

3. Appareil de commande de liaison pour unités intérieures et extérieures d'un conditionneur d'air de précision, comprenant :

un capteur de température (1) configuré pour obtenir un écart thermique entre une entrée et une sortie d'un évaporateur (2) ; un capteur de pression (3), configuré pour obtenir une pression d'un réfrigérant à une extrémité avant d'un condenseur (4), de manière à ajuster une vitesse de rotation M d'un ventilateur du condenseur (4) ;

un processeur (5), **caractérisé en ce que** le processeur (5) est configuré pour obtenir une fréquence de fonctionnement cible $f_n$ d'un compresseur (6), selon l'écart de charge thermique de l'évaporateur (2) et un algorithme de PID, dans lequel l'écart de charge thermique est un produit d'un volume d'air de l'évaporateur (2), de l'écart thermique de l'air entre l'entrée et la sortie de l'évaporateur (2), et d'une puissance calorifique d'air spécifique, dans lequel le volume d'air de l'évaporateur (2) est un volume d'air qui s'écoule à travers l'évaporateur (2) par unité de temps, dans lequel le processeur (5) est en outre configuré pour obtenir une puissance frigorifique cible $Q_n$ selon une fonction de puissance frigorifique cible et

en conjonction avec une température de condensation $T_{cn}$, une température d'évaporation $T_{en}$, et la fréquence de fonctionnement cible $f_n$ du compresseur (6) dans un état en cours, dans lequel la température de condensation $T_{cn}$ est une température du réfrigérant dans le condenseur (4), et la température d'évaporation $T_{en}$ est une température du réfrigérant dans le compresseur (6) ;

le processeur (5) est en outre configuré pour obtenir une puissance cible $W_1$ du compresseur (6) selon une fonction de puissance du compresseur (6) et en conjonction avec la température de condensation $T_{cn}$, la température d'évaporation $T_{en}$, et la fréquence de fonctionnement cible $f_n$ du compresseur (6) dans l'état en cours ;

le processeur (5) est en outre configuré pour obtenir une puissance cible $W_2$ du condenseur (4) selon une fonction de puissance du condenseur (4) et en conjonction avec la température de condensation $T_{cn}$, la température d'évaporation $T_{en}$, et la fréquence de fonctionnement cible $f_n$ du compresseur (6) dans l'état en cours, un écart thermique $\Delta t_1$ entre une température de l'air d'entrée et une température de l'air de sortie du condenseur (4), et la vitesse de rotation M d'un ventilateur du condenseur (4) ;

le processeur (5) est en outre configuré pour obtenir une puissance cible $W_3$ de l'évaporateur (2) selon une fonction de puissance de l'évaporateur (2) et en conjonction avec la température de condensation $T_{cn}$, la température d'évaporation $T_{en}$, et la fréquence de fonctionnement cible $f_n$ du compresseur (6) dans l'état en cours, un écart thermique $\Delta t_2$ entre la température de l'air d'entrée et la température de l'air de sortie de l'évaporateur (2), et une vitesse de rotation N d'un ventilateur de l'évaporateur (2), dans lequel la vitesse de rotation N d'un ventilateur de l'évaporateur (2) est déterminée par le capteur de température (1) selon l'écart thermique entre l'entrée et la sortie de l'évaporateur (2) ; dans lequel la valeur du coefficient de performance (COP) dans l'état en cours du conditionneur d'air est : $COP=Q_n/(W_1+W_2+W_3)$ ;

le processeur (5) est en outre configuré pour : optimiser, dans une plage de $Q_n(\pm a\%+1)$, la fréquence de fonctionnement cible $f_n$, la température de condensation $T_{en}$, et la température d'évaporation $T_{en}$ respectivement dans des plages spécifiées selon une fonction de coefficient de performance (COP) du conditionneur d'air, de manière à obtenir une fréquence de fonctionnement cible $f_n$d, une température de condensation cible $T_{cn}$d, et une température d'évaporation cible $T_{en}$d lorsqu'une valeur de COP est maximale, dans lequel le « a » est un entier naturel prédéfini ; et

le processeur (5) est en outre configuré pour ajuster la vitesse de rotation N d'un ventilateur de l'évaporateur (2) selon un écart thermique cible entre l'entrée et la sortie de l'évaporateur (2), commander le compresseur (6) pour qu'il fonctionne à la fréquence de fonctionnement cible $f_n$d, et ajuster la vitesse de rotation M d'un ventilateur du condenseur (4) selon la température de condensation cible $T_{en}$d du condenseur (4), dans lequel l'écart thermique cible entre la température de l'air d'entrée et la température de l'air de sortie de l'évaporateur (2) est $\Delta t_2$-$(T_{en}$d$-T_{en})$ ; et

une mémoire (7), configurée pour stocker les données et programmes précédents.

4. Appareil selon la revendication 3, dans lequel l'optimisation, dans la plage de $Q_n(\pm a\ \%+1)$, de la fréquence de fonctionnement cible $f_n$, de la température de condensation $T_{cn}$, et de la température d'évaporation $T_{en}$ respectivement dans des plages spécifiées selon la fonction de coefficient de performance (COP) du conditionneur d'air, de manière à obtenir la fréquence de fonctionnement cible $f_n d$, la température de condensation cible $T_{cn}d$, et la température d'évaporation cible $T_{en}d$ lorsque la valeur de COP est maximale comprend notamment : l'optimisation, dans la plage de $Q_n(\pm a\ \%+1)$, de la fréquence de fonctionnement $f_n$, de la température de condensation $T_{cn}$, et de la température d'évaporation $T_{en}$ respectivement dans des plages $f_n\pm b$ Hz, $T_{cn}\pm c$ °C, et $T_{en}\pm d$ °C selon la fonction de coefficient de performance (COP) du conditionneur d'air, de manière à obtenir la fréquence de fonctionnement cible $f_n d$, la température de condensation cible $T_{cn}d$, et la température d'évaporation cible $T_{en}d$ lorsque la valeur de COP est maximale, dans lequel a, b, et c sont des constantes prédéfinies.

Obtain temperature difference load of an evaporator and obtain, according to a PID algorithm, a target working frequency $f_n$ of a compressor, where the temperature difference load is a product of an air volume of the evaporator, an air temperature difference between an inlet and an outlet of the evaporator, and an air specific heat capacity — S101

Obtain a target cooling capacity $Q_n$ of the compressor according to a target cooling capacity function of the compressor and in combination with a condensing temperature $T_{cn}$, an evaporating temperature $T_{en}$, and $f_n$ in a current status, where the condensing temperature $T_{cn}$ is a temperature of a refrigerant in a condenser, and the evaporating temperature $T_{en}$ is a temperature of the refrigerant in the compressor; obtain a target power $W_1$ of the compressor according to a power function of the compressor and in combination with the condensing temperature $T_{cn}$, the evaporating temperature $T_{en}$, and $f_n$ in the current status; obtain a target power $W_2$ of the condenser according to a power function of the condenser and in combination with the condensing temperature $T_{cn}$, the evaporating temperature $T_{en}$, and $f_n$ in the current status, a temperature difference $\Delta t_1$ between an inlet and an outlet of the condenser, and a rotational speed M of the condenser, where the rotational speed M of the condenser is obtained by a pressure sensor according to pressure of the refrigerant at a front end of the condenser; and obtain a target power $W_3$ of the evaporator according to a power function of the evaporator and in combination with the condensing temperature $T_{cn}$, the evaporating temperature $T_{en}$, and $f_n$ in the current status, a temperature difference $\Delta t_2$ between the inlet and the outlet of the evaporator, and a rotational speed N of the evaporator — S102

Optimize, in a range of $Q_n(\pm a\% + 1)$, the target working frequency $f_n$, the condensing temperature $T_{cn}$, and the evaporating temperature $T_{en}$ respectively in specified ranges according to a coefficient of performance COP function of an air conditioner, so as to obtain a target working frequency $f_n d$, a target condensing temperature $T_{cn}d$, and a target evaporating temperature $T_{en}d$ when a COP value is maximum, where a is a preset natural number — S103

Adjust the rotational speed N of the evaporator according to a target temperature difference between the inlet and the outlet of the evaporator, control the compressor to run at the target working frequency $f_n d$, and adjust the rotational speed M of the condenser according to the target condensing temperature $T_{cn}d$ of the condenser, where the target temperature difference between the inlet and the outlet of the evaporator is $\Delta t_2 - (T_{en}d - T_{en})$ — S104

FIG. 1

Temperature difference load → PID algorithm → Target frequency f of a compressor

Target frequency f of a compressor ↓ Frequency adjustment of the compressor

Frequency adjustment of the compressor ↓ High pressure of a condenser and temperatures of an inlet and an outlet of an evaporator

According to the high pressure of the condenser → Adjustment of a rotational speed of an outdoor fan

According to a temperature difference between the inlet and the outlet of the evaporator → Adjustment of a rotational speed of an indoor fan

FIG. 2

FIG. 3

State 1

Frequency of a compressor : $f_1$
Condensing temperature : $T_{c1}$
Evaporating temperature : $T_{e1}$
Rotational speed of an indoor fan : $N_1$
Rotational speed of an outdoor fan : $M_1$

State 2

Frequency of a compressor : $f_2$
Condensing temperature : $T_{c2}$
Evaporating temperature : $T_{e2}$
Rotational speed of an indoor fan : $N_2$
Rotational speed of an outdoor fan : $M_2$

Cooling capacity Q

State n

Frequency of a compressor : $f_n$
Condensing temperature : $T_{cn}$
Evaporating temperature : $T_{en}$
Rotational speed of an indoor fan : $N_n$
Rotational speed of an outdoor fan : $M_n$

Optimum COP

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120210736 A1
- US 2012210736 A1
- US 20120253543 A1
- US 20140345307 A1